# EUROPEAN PATENT SPECIFICATION

(11) **EP 3 776 768 B1**
(45) Date of publication and mention of the grant of the patent: **26.10.2022**
(21) Application number: 18721701.3
(22) Date of filing: 13.04.2018
(51) Int. Cl.: H02B 1/36

(54) **MECHANICAL ENCODING OF A WITHDRAWABLE MODULE**
MECHANISCHE CODIERUNG EINER EINSCHUBANORDNUNG
DISPOSITIF DE CODAGE MECANIQUE DE MODULE ENFICHABLE

(30) Priority: 04.04.2018 WO PCT/EP2018/058618; 04.04.2018 WO PCT/EP2018/058620; 04.04.2018 WO PCT/EP2018/058621
(43) Date of publication of application: 17.02.2021
(73) Proprietor: ABB Schweiz AG, 5400 Baden (CH)
(72) Inventor: SCHMITT, Hans-Jürgen, 69493 Hirschberg (DE)
(74) Representative: Kesselhut, Wolf
(86) International application number: PCT/EP2018/059500
(87) International publication number: WO 2019/192738

(56) References cited:
- DE-A1- 3 323 821
- DE-A1-102007 025 458
- GB-A- 981 088

## Description

The invention concerns a coding strip for the mechanical encoding of a docking bay and a slide-in module, a method for the mechanical encoding of a docking bay and a slide-in module containing such a coding strip according to independent claims 1 and 9, as well as dependent claim 11.

Slide-in modules are known in the prior art for that they can be inserted into switchgear cabinets and removed from the latter again. Such slide-in modules can be inserted in the manner of a drawer into an associated docking bay of a switchgear cabinet and can be removed from the latter. Modules of this type can support or accommodate electrical equipment, or can be designed as such equipment. The docking bays interacting with the modules have, for example, electrical contact elements which get into contact with the slide-in module when the latter is inserted in a docking bay in the end position. Although the modules are designed in a mechanically similar or identical manner and can usually be inserted into the same docking bays of a control cabinet, they often have different electrical functions and properties by virtue of their different intended uses. Such known slide-in modules and cabinets are for instance shown in DE 10 2007 025458 A1, GB 981 088 A and DE 33 23 821 A1.

In practice, there is a need for docking bays and/or housings or cabinets that are constructed to be as uniform as possible, in which the above-described slide-in modules can be inserted, protected against polarity reversal, and can also be pulled out again.

It is therefore an object of the present invention to provide a coding strip and a method by which slide-in modules which are insertable into docking bays of switchgear cabinets can be mechanically encoded in a simple manner and protected against polarity reversal.

In accordance with the invention the above object is achieved by a coding strip with the features of claim 1, and a method with the features of claim 9.

A further object of the invention is to create a slide-in module for a docking bay which allows for a simple mechanical encoding.

This object is achieved in accordance with the invention by a slide-in module comprising the features of claim 11.

In accordance with the invention, a coding strip for the mechanical encoding of a docking bay and/or a slide-in module for insertion into a docking bay, in particular in a switchgear cabinet or a switchgear assembly, comprises a base body which can be accommodated at the docking bay or at the slide-in module for interacting with a complementary coding strip. The coding strip is characterised in that a first coding element can be arranged at the base body in at least two different coding positions.

A coding position describes a position of the coding element in which the latter prevents the insertion of the slide-in module into the end position in a docking bay with a coding element of a corresponding coding strip that is coded in another manner. The absence of a coding element, which enables all possible coding positions of a corresponding coding strip, is not to be understood as a coding position of the coding element in the context of the present invention. Likewise, allowing one coding element to remain vacant in the case of coding strips with a plurality of in particular 7 or more coding elements may be advantageous for the encoding of compatible modules.

In accordance with a further object of the invention, the coding strip has at least one additional coding element which can be arranged in at least two different possible coding positions at the base body. The coding strip and the complementary additional coding strip that is interacting with the latter, which are attached to the docking bay and to the slide-in module, may comprise preferably at least six additional mechanical encoding elements, each of which can be arranged in at least two coding positions at the base body of the respective coding strip.

This provides for the advantage that for example slide-in modules with power controllers for electric drive motors, whose motor outputs form a mutually compatible family, whose family members differ only in their power class, and where even the lowest power class is sufficient for operation of the motor assigned to a docking bay, can be coded for such a docking bay.

For example, the docking bay can be encoded with a coding strip that leaves two of seven coding elements vacant, preferably the two lower-order coding elements, and thus allows a family of three different motor outputs. In this case, the coding elements can, for example, be encoded in a binary manner and can assume two coding positions. The exemplary seven coding elements mentioned before can e.g. be numbered from 1 to 7, and can be assigned values of 1, 2, 4, 8, 16, 32 and 64, so that a maximum of 1 + 2 + 4 + 8 + 16 + 32 + 64 = 127 different coding options may be obtained for such a coding strip.

The base body of the coding element advantageously possesses an elongated shape and has at least two recesses for accommodating the coding elements which are preferably arranged along the longitudinal axis of the base body. At the respectively opposite ends of the base body attachment means, such as, e.g., fixing tabs, can be provided to attach the latter to the housing of a slide-in module and/or a docking bay which is preferably accommodated in a switchgear cabinet.

In accordance with a further embodiment of the invention, the recesses which serve to accommodate the coding elements are arranged equidistantly along an imaginary line, which preferably runs at a distance from, and parallel to, the longitudinal axis of the base body. Here the equidistant and central arrangement of the recesses offers the advantage that the coding strip can be designed so as to save space.

Furthermore, it is advantageous if the coding elements on the transverse axis of the base body are arranged with mirror-symmetry towards the outer side along the longitudinal axis, so that for purposes of ensuring protection against polarity reversal an identically designed coding strip can be attached to both the slide-in module and also to the corresponding docking bay at the same height.

In the preferred embodiment of the invention, provision is made for the recesses to be formed at the rear face of the base body, and for each recess to contain at least one aperture.

By means of this the coding elements can advantageously be inserted from the rear side into the recesses of the base body of the coding strip, which are preferably rectangular in shape when seen in a plan view. By attaching the base body to a flat section of the slide-in module or the docking bay, e.g. by means of screws and/or locking elements, the coding elements can be fixed in minimal time and with little effort at the slide-in module or docking bay.

In the preferred embodiment of the invention, the apertures of the recesses in the base body are L-shaped in design. This advantageously results in two coding positions. The first and also the additional coding elements which are inserted into the recesses of the coding strip at the docking bay, or the coding strip of complementary design on the slide-in module, preferably have in each case a tab which, depending on the coding, can be guided through either the horizontal section or the vertical section of the L-shaped aperture, and which, after the attachment of the base body at the slide-in module and/or docking bay, protrudes from the upper face of the aperture. This allows the tab, which may be designed as a right-angled element, to protrude from the aperture either in a first (standing) coding position along the vertical section of the L-shaped aperture, or by rotation through 90° in a second (horizontal) coding position along a horizontal section of the L-shaped aperture running transverse to the aperture, in order to effect the desired mechanical encoding, respectively. Here the section of the tab protruding from the opening advantageously has a smaller width than the length of the vertical or horizontal section of the L-shaped aperture, so that the L-shaped tab, which preferably comprises a square base, does not extend into the horizontal section of the aperture when it protrudes through the vertical section, and vice versa.

In accordance with the invention, the base body is designed in two parts and comprises a first part and a second part. In accordance with a further embodiment it is in the first part that the recesses are formed with the apertures, and the second part overlaps all the recesses and can be positioned on and attached to the first part.

This offers the advantage that after insertion into the base body the coding elements are fixed to the first part by means of the second rear part which has the form of a cover and allows an attachment to a lower edge of a docking bay without the coding elements being able to fall out of the base body during the assembly of the coding strip.

In accordance with a further embodiment of the invention, the first coding element and the additional coding element in the base body are designated in opposite directions in terms of numbers or letters, so that the first coding element, when reading from top to bottom, is designated, e.g., with a 1, and the additional coding element is designated with a 2, etc. In contrast, the other coding element, reading from bottom to top, is designated with an inverted 1, and the first coding element is designated with an inverted 2, etc. With the deployment of additional coding elements, the respective number or letter sequences continue accordingly.

This has the advantage that the encoding of a coding strip and a complementary coding strip interacting with the coding strip which are arranged opposite to one another on the docking bay and the slide-in module, can be implemented particularly easily and quickly, independent of the installation position.

In accordance with a further object of the invention, the method for the mechanical encoding of a docking bay and/or a slide-in module for insertion into a docking bay, in particular of a switchgear cabinet, with a coding strip of the type described above, which possesses at least one first coding element, comprises the following method steps:
a) establishing the coding position of the first coding element to be a first coding position or a second coding position,
b) arranging the first coding element at the base body, and
c) mounting the base body with the first coding element at the docking bay or the slide-in module.

The method has the advantage that two different codings can be obtained with one coding element of a coding strip. This corresponds to a binary coding.

In case of coding strips which have at least one, but preferably several, e.g. six, additional coding elements, the method may comprise the following additional method steps:
d) establishing the coding positions of each of the additional coding elements to be either a first or a second coding position,
e) arranging the additional coding elements in the established coding positions at the base body,
f) configuring an additional coding strip encoded in a complementary manner to the coding strip in accordance with the method steps a), b), d) and e), and
g) mounting the coding strip and the other complementarily coded coding strip at a docking bay and a slide-in module such that when inserting the slide-in module into the docking bay the coding strips are opposed to each other and interact mechanically such that parts of the coding elements protruding from the coding strip extend into apertures of the complementarily coded additional coding strip that are not occupied.

This provides for the advantage that with e.g. six, additional coding elements which are arranged at the coding strip or the complementary coding strip, a binary coding with up to 7 digits may be obtained which corresponds to a number between 1 and 127. This provides for a reliable protection against reversal of polarity in a switchgear cabinet with up to 127 docking bays. If desired, the number of additional coding elements can also be selected to be either smaller or larger, corresponding to the number of docking bays installed in a switchgear cabinet.

The invention is hereinafter described with reference to the accompanying drawings.

In the drawings:
- Fig. 1: shows a perspective view of a coding strip which has a base body with frontal L-shaped apertures, through which tabs of a total of 7 coding elements protrude,
- Fig. 2: shows an exploded view of the coding strip with a two-part base body and seven coding elements which can be accommodated in rear recesses of a first part of the base body,
- Fig. 3: shows a plan view of the coding strip of Fig. 1 with additional crosssectional views drawn at the levels of the recesses,
- Fig. 4: shows a rear view of the first part of the base body of the coding strip of the invention with inserted coding elements,
- Fig. 5: shows the second part of the base body of the coding strip of Fig. 2 which covers the recesses,
- Fig. 6: shows a side view of the coding strip of Figs. 1 and 2,
- Fig. 7: shows a partial view of a control cabinet with an exemplary docking bay without coding strips,
- Fig. 8: shows a partial view of a docking bay which is provided in the vicinity of the opening with laterally arranged coding strip according to the present invention,
- Fig. 9: shows a further schematic partial view of a further docking bay with a laterally mounted coding strip,
- Fig. 10: shows an exemplary slide-in module with an additional coding strip laterally arranged on the latter which is coded in a complementary manner to the coding strip of the docking bay of Figs. 8 and 9 , and
- Fig. 11: shows a coding strip together with an additional coding strip, with coding elements that are coded in a complementary manner to each another.

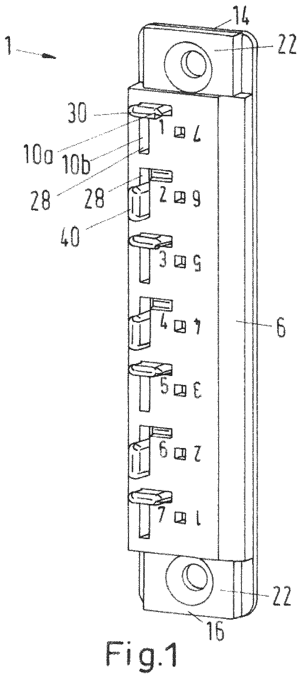

Fig. 1 shows a perspective view of a coding strip for the mechanical encoding of a docking bay 2 and/or a slide-in module 4 for insertion into a docking bay 2, which may be used in a switchgear cabinet or a switching station. The coding strip 1 has a base body 6 with frontal L-shaped apertures 28, through which tabs 30, 40 of coding elements 8, 18 can protrude in two different coding positions 10a, 10b. At the respective ends 14, 16 of the base body 6 are located attachment means 22 which may be designed as fastening tabs.

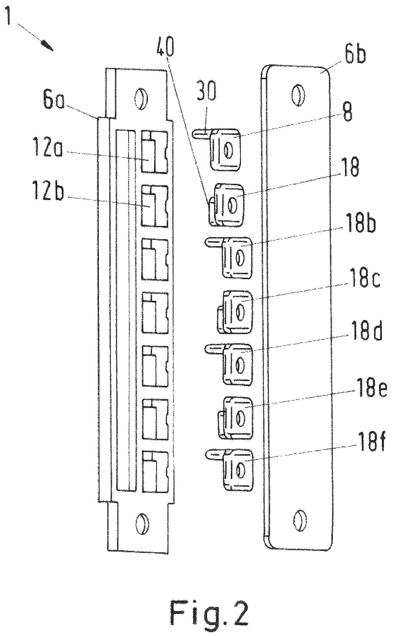

Fig. 2 shows an exploded view of the coding strip 1 having a two-part base body 6 in combination with seven coding elements 8, 18, 18b, 18c, 18d, 18e, 18f which can be inserted into the first part 6a of the base body 6 in different coding positions. For example, the tabs 30, 40 of the first coding element 8 and the additional coding element 18 are shown rotated by 90 degrees relative to one another in different coding positions 10a, 10b.

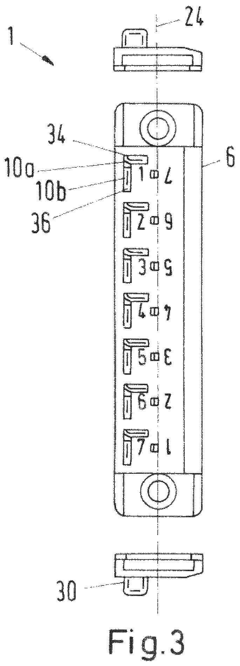

Fig. 3 shows a plan view of the inventive coding strip 1 with the coding elements 8, 18 accommodated in the rearward, non-visible recesses in the base body 6, which are arranged in two different coding positions 10a, 10b. The aperture 28 is L-shaped in design and is divided into a horizontal slot-shaped section 34 of the aperture 28, together with a vertical slot-shaped section 36. The apertures 28, together with the coding elements 8 and 18, are arranged at a distance from the longitudinal axis of the base body 6. The tab 30 of the coding element 8 is illustrated in the lower part of Figure 3 and shows the horizontal coding position 10a.

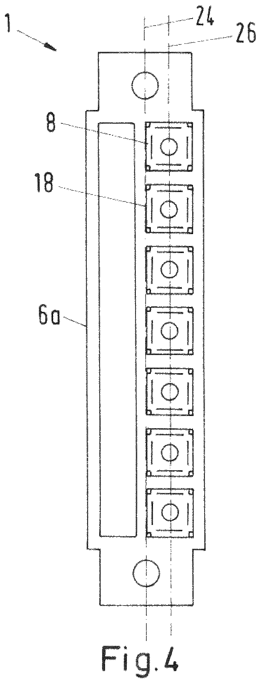

Fig. 4 shows a rear view of the coding strip 1 of Fig. 1, that is to say, of the first part 6a of the two-part base body 6, with inserted coding elements 8 and 18. As can be seen from the illustration, the recesses 12a, 12b which have a square cross-section, into which the coding elements 8, 18 are inserted at regular intervals along an imaginary line 26 which runs parallel to the longitudinal axis 24 of the base body 6a.

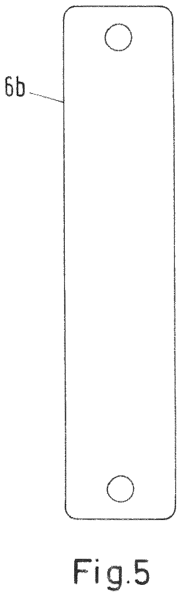

Fig. 5 shows the second part 6b of the two-part base body 6 of Fig. 2 which is designed as a cover element and serves to fix the coding elements 8, 18 inserted into the first part 6a of the base body 6 in the recesses 12, in particular by a clamping action. This advantageously enables the coding strip 1 to be mounted with the tabs 30, 40 of the coding elements protruding upwards; the coding elements 8, 18 would otherwise fall out of their recesses 12a, 12b.

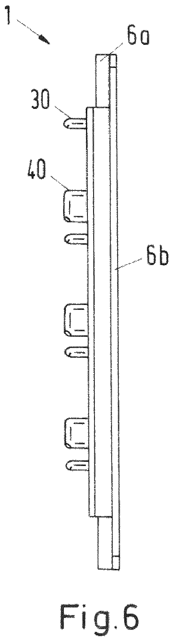

Fig. 6 shows a schematic side view of the coding strip 1 in which the mechanical encoding action of the inventive coding strip 1 can clearly be seen. The coding elements 8, 18 are arranged either in the first horizontal coding position 10a or the second vertical coding position 10b; and the tabs 30, 40 protrude from the otherwise flat front face of the base body 6 which is not specified in any further detail.

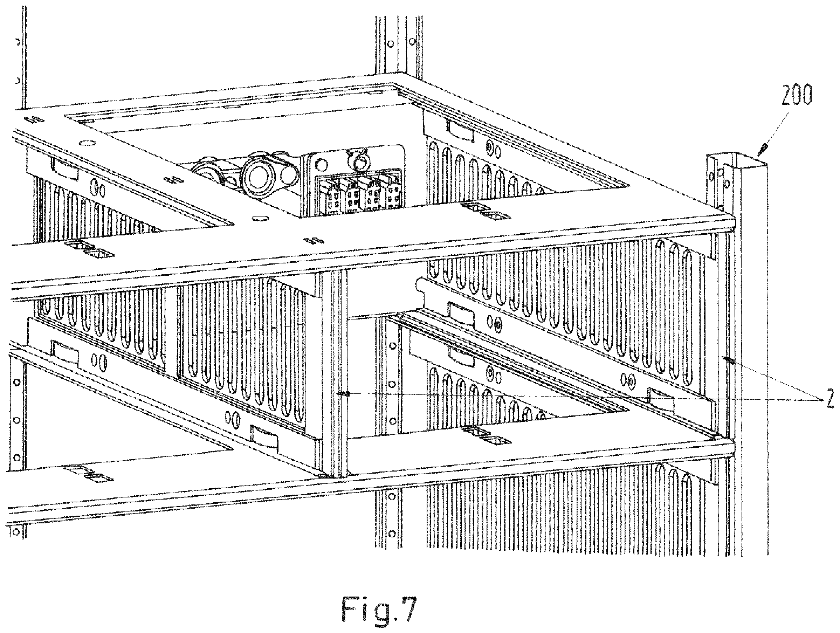

Fig. 7 shows an exemplary docking bay 2 in a part view of a control cabinet 200 which is adapted to accommodate a slide-in module 4 which is exemplarily indicated.

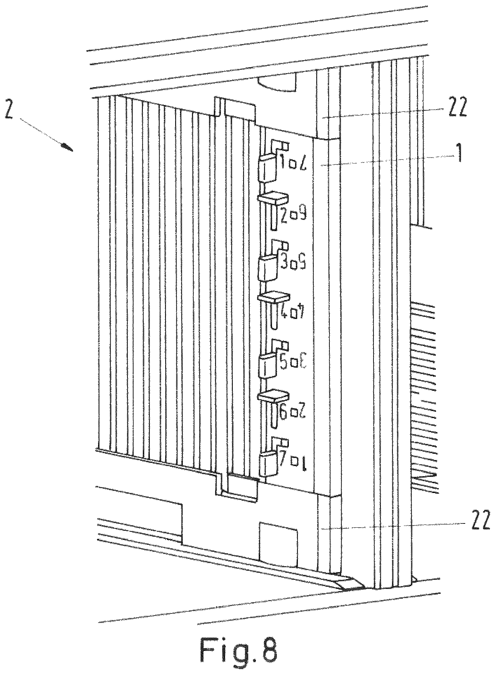

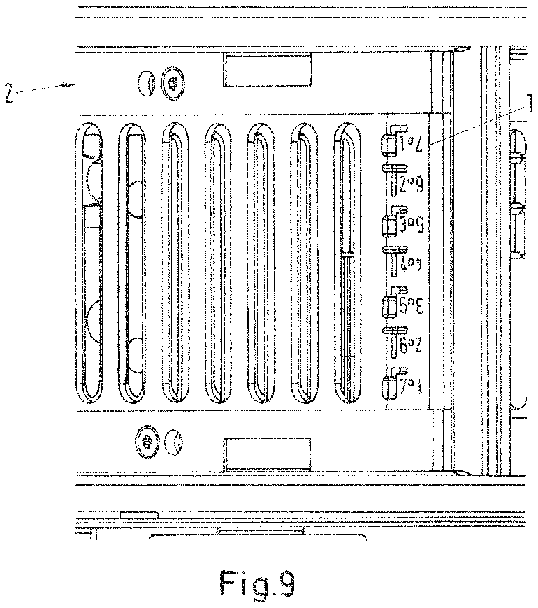

Fig. 8 and Fig. 9 show a detailed view of the docking bay 2 and in particular the lateral front edge of the docking bay 2 which is fitted with a coding strip 1 in accordance with the invention. In the front region, i.e. in the vicinity of the insertion opening of the docking bay 2, the coding strip can be attached by attachment means 22, e.g. screws or pins, to the side wall of the docking bay. For this purpose, the coding strip 1 is accommodated in the docking bay 2 in such a way that it is only possible to insert a slide-in module 4 with an additional coding strip 100 that has been coded in a complementary manner. The coding strip 1 otherwise represents a mechanical barrier and prevents an electrical contact of the contact elements in the rear part of the docking bay 2 in the end position, so that effective protection against a reversal of polarity of the electrical connections is obtained.

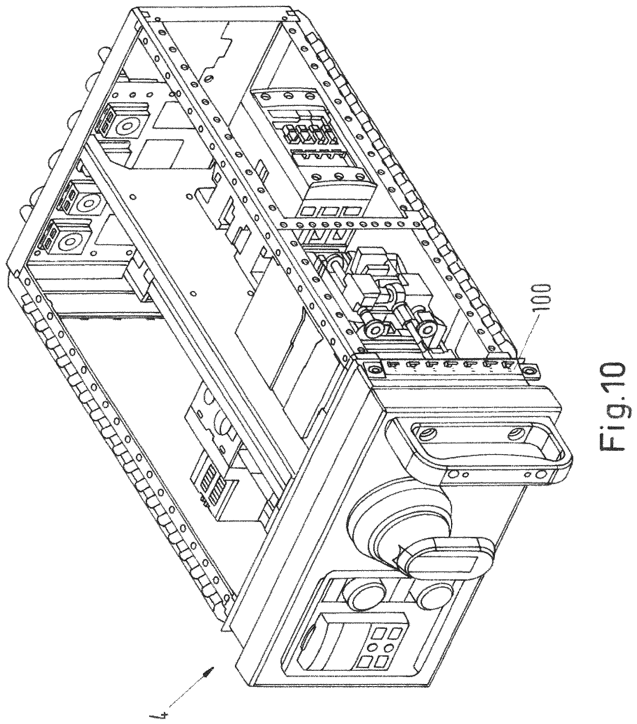

Fig. 10 shows an exemplary slide-in module 4 with an additional coding strip 100 that is coded in a corresponding complementary manner to the coding strip 1 shown in Figs. 8 and 9. This is laterally attached to the slide-in module 4, for example by means of fastening tabs. By virtue of the additional coding strip 100, the slide-in module 4 can only be inserted into appropriate docking bays 2 comprising a correspondingly complementary coding strip 1.

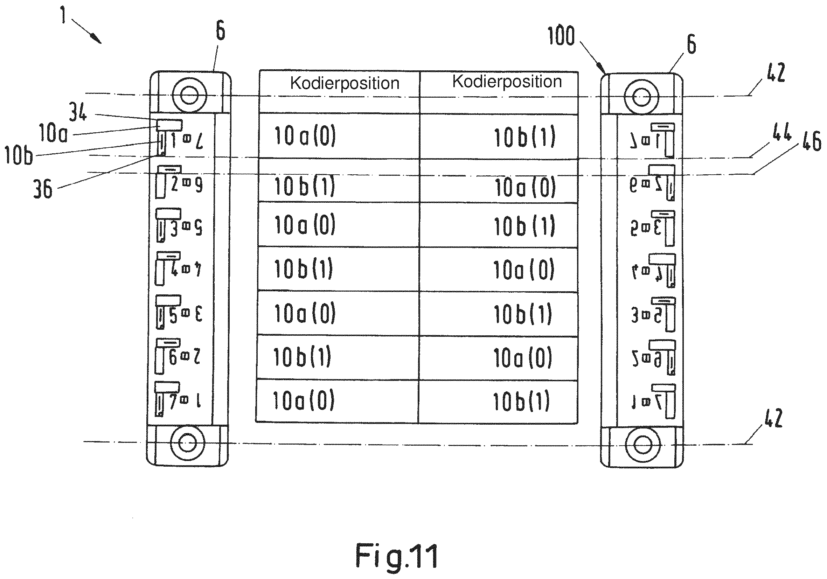

Fig. 11 shows the coding strip 1 and the additional coding strip 100 with coding elements 8, 18 which are positioned in a complementary manner relative to one another. In order to encode these, the base bodies 6 of the respective coding strips 1, 100 are arranged at the same height line 42 on a docking bay 2 or a slide-in module 4, so that the respective coding elements 8, 18 with the associated coding positions 10a, 10b are located on mutually corresponding height lines 44, 46, as it is shown by the dashed lines in Fig. 11. The vertical height line 44 prevents the insertion of a slide-in module 4 into a docking bay 2 with coding strips 1, 100, in each of which the first coding element 8 or a corresponding coding element 18, 18b, 18c, 18d, 18e, 18f, is arranged vertically in the second coding position 10b. In contrast, the horizontal height line 46 prevents the insertion of a slide-in module 4 into a docking bay 2 with coding strips 1, 100, in each of which the first coding element 8, or a corresponding coding element 18, 18b, 18c, 18d, 18e, 18f, is arranged horizontally in the first coding position 10a. In other words, for a complete movement of the slide-in module 4 into the end position in which the electrical plug-in contact elements of the module and docking bay are electrically interconnected, it is necessary for the first coding element 8 of the first coding strip 1 to protrude with its tab 30 through the horizontal slot-shaped section 34 of the associated aperture, and for the first coding element 8 of the additional coding strip 100 to protrude with its tab 30 through the vertical slot-shaped section 36 of the associated aperture, so that the two coding strips 1, 100 correspond to one another and the ends of the tabs 30 in each case can enter into the free unoccupied slot-shaped sections of the respectively other coding strip.

**Reference list**

| | |
|---|---|
| 1 | Coding strip |
| 2 | Docking bay |
| 4 | Slide-in module |
| 6 | Base body |
| 6a | First part of the base body 6 |
| 6b | Second part of the base body 6 |
| 8 | First coding element |
| 10a/10b | Coding position |
| 12a/12b | Recess |
| 14 | First end of the base body 6 |
| 16 | Second end of the base body 6 |
| 18, b, c, d, e, f | Additional coding element |
| 22 | Attachment means |
| 24 | Longitudinal axis |
| 26 | Imaginary line |
| 28 | Aperture |
| 30 | Tab |
| 34 | Horizontal slot-shaped section of the aperture |
| 36 | Vertical slot-shaped section of the aperture |
| 40 | Tab |
| 42 | Height line |
| 44 | Coding height vertical |
| 46 | Coding height horizontal |
| 100 | Additional coding strip |
| 200 | Switchgear cabinet |

## Claims

1. Coding strip (1) for the mechanical encoding of a docking bay (2) and a slide-in module (4) for insertion into such a docking bay (2), in particular in a switchgear cabinet, comprising a base body (6) which is adapted to be arranged at the docking bay (2) or at the slide-in module (4) to interact with a complementary coding strip (1), wherein a first coding element (8) is arrangable at the base body (6) in at least two different coding positions (10a, 10b) **characterised in that,**
the base body (6) is designed as two parts, and **in that** the first coding element (8) is accommodated at the first part (6a) of the base body (6) and can be fixed at the first part (6a) by means of the second part (6b) of the base body (6).

2. Coding strip (1) according to claim 1, **characterised in that** at least one additional coding element (18) is arrangable at the base body (6) in at least two different coding positions (10a, 10b).

3. Coding strip (1) according to claim 2, **characterised in that** the base body (6) has an elongated shape and comprises at least two recesses (12a, 12b) which are arranged along an imaginary line (26), the recesses being adapted to accommodate the coding elements (8, 18), and **in that** attachment means (22) are provided at the respective opposite ends (14, 16) of the base body (6) for attaching the base body (6) to a docking bay and/or a slide-in module (1).

4. Coding strip (1) according to claim 3, **characterised in that** for accommodating the coding elements (8, 18), the recesses (12a, 12b) are arranged at regular intervals along the imaginary line (26), the imaginary line (26) running parallel to and at a distance from the longitudinal axis (24) of the base body (6).

5. Coding strip (1) according to claim 3 or 4, **characterised in that** the recesses (12a, 12b) are formed in the rear face of the base body (6) and each recess (12a, 12b) contains at least one aperture (28).

6. Coding strip (1) according to claim 5, **characterised in that** the aperture (28) of a recess (12a, 12b) in the base body (6) is L-shaped in design, and **in that** the first coding element (8) and/or the additional coding element (18) comprises a tab (30, 40) which can be guided through the L-shaped aperture (28) such that in a first coding position (10a) the tab (30, 40) extends through a horizontal section (34) of the L-shaped aperture (28), or in a second coding position (10b) extends through a vertical section (36) of the L-shaped aperture (28).

7. Coding strip (1) according to any of the claims 1 to 6, **characterised in that** an additional coding element (18) is accommodated at the first part (6a) of the base body (6) and can be fixed at the first part (6a) by means of the second part (6b) of the base body (6).

8. Coding strip (1) according to any of the claims 2 to 7, **characterised in that** the first coding element (8) and the additional coding element (18) in the base body (6) are designated in terms of numbers or letters in opposite directions, in particular numerically, such that the first coding element (8) and the additional coding element (18), when read from top to bottom, are designated with consecutive numbers, and when read from bottom to top, are designated with consecutive numbers which are rotated by 180°.

9. A method for the mechanical encoding of a docking bay (2) and a slide-in module (4) for insertion into a docking bay (2) in a switchgear cabinet (200) comprising a coding strip (1) in accordance with one of the claims 1 to 8, **characterised by** the following method steps:
a) establishing a coding position (10a, 10b) of the first coding element (8) to be a first coding position or a second coding position,
b) arranging the first coding element (8) at the base body (6) with the established coding position, and
c) mounting the base body (6) with the first coding element (8) at the docking bay (2) or at the slide-in module (4).

10. Method according to claim 9, wherein the coding strip (1) comprises additional coding elements (18b, 18c, 18d, 18e, 18f, 18g), each of which can be accommodated at the base body (6) in at least two coding positions (10a, 10b), the method comprising the following method steps:
d) establishing the coding positions (10a, 10b) of the additional coding elements (18b, 18c, 18d, 18e, 18f, 18g),
d) arranging the additional coding elements (18b, 18c, 18d, 18e, 18f, 18g) in the established coding positions (10a, 10b) at the base body (6),
f) configuring an additional coding strip (100) to be coded in a complementary manner to the first coding strip (1) in accordance with the method steps a), b), d) and e), and
g) arranging the coding strip (1) and the additional coding strip (100) at a docking bay (2) and a slide-in module (4) such that when inserting the slide-in module (4) into the docking bay (2) the coding strips (1, 100) interact mechanically and an insertion of the slide-in module (4) into the end station of the docking bay (2) can only be done if the additional coding strip (100) is coded in a complementary manner to the coding strip (1).

11. Slide-in module (4) for insertion into a docking bay (2) of a switchgear cabinet (200), comprising a coding strip (1) according to any of the claims 1 to 8.

12. Switchgear cabinet (200) containing a multiplicity of docking bays (2) and at least one slide-in module (4) which is insertable into the multiplicity of docking bays, **characterised in that**,
a coding strip (1) in accordance with any of the claims 1 to 8 is mounted to at least one of the docking bays (2), and **in that** an additional coding strip (100) in accordance with any of the claims 1 to 8 which is coded in a complementary manner to the coding strip (1), is arranged at the slide-in module (4); wherein in the inserted position of the slide-in module (4) the additional coding strip (100) mechanically interacts with the coding strip (1) of the docking bays (2) in such a way that parts of the coding elements (8, 18) of the coding strip (1) are insertable into apertures (28) of the complementary additional coding strip (100).

## Patentansprüche

1. Codierstreifen (1) zur mechanischen Codierung einer Andockstation (2) und eines Einschubmoduls (4) zum Einsetzen in eine solche Andockstation (2), insbesondere in einem Schaltschrank, umfassend einen Basiskörper (6), der geeignet ist, um an der Andockstation (2) oder an dem Einschubmodul (4) angeordnet zu werden, um mit einem komplementären Codierstreifen (1) zu interagieren, wobei ein erstes Codierelement (8) an dem Basiskörper (6) in mindestens zwei unterschiedlichen Codierpositionen (10a, 10b) angeordnet werden kann,
**dadurch gekennzeichnet, dass**
der Basiskörper (6) zweiteilig konzipiert ist, und dass das erste Codierelement (8) an dem ersten Teil (6a) des Basiskörpers (6) untergebracht wird und an dem ersten Teil (6a) mittels des zweiten Teils (6b) des Basiskörpers (6) fixiert werden kann.

2. Codierstreifen (1) nach Anspruch 1, **dadurch gekennzeichnet, dass** mindestens ein zusätzliches Codierelement (18) an dem Basiskörper (6) in mindestens zwei unterschiedlichen Codierpositionen (10a, 10b) angeordnet werden kann.

3. Codierstreifen (1) nach Anspruch 2, **dadurch gekennzeichnet, dass** der Basiskörper (6) eine längliche Form hat und mindestens zwei Aussparungen (12a, 12b) umfasst, die entlang einer imaginären Linie (26) angeordnet sind, wobei die Aussparungen geeignet sind, um die Codierelemente (8, 18) unterzubringen, und dass Befestigungsmittel (22) an den jeweiligen entgegengesetzten Enden (14, 16) des Basiskörpers (6) bereitgestellt werden, um den Basiskörper (6) an einer Andockstation und/oder einem Einschubmodul (1) zu befestigen.

4. Codierstreifen (1) nach Anspruch 3, **dadurch gekennzeichnet, dass** die Aussparungen (12a, 12b) zum Unterbringen der Codierelemente (8, 18) in regelmäßigen Intervallen entlang der imaginären Linie (26) angeordnet sind, wobei die imaginäre Linie (26) parallel zu und in einem Abstand von der Längsachse (24) des Basiskörpers (6) verläuft.

5. Codierstreifen (1) nach Anspruch 3 oder 4, **dadurch gekennzeichnet, dass** die Aussparungen (12a, 12b) in der Rückseite des Basiskörpers (6) gebildet sind und jede Aussparung (12a, 12b) mindestens einen Durchlass (28) enthält.

6. Codierstreifen (1) nach Anspruch 5, **dadurch gekennzeichnet, dass** der Durchlass (28) einer Aussparung (12a, 12b) in dem Basiskörper (6) von L-förmigem Design ist, und dass das erste Codierelement (8) und/oder das zusätzliche Codierelement (18) eine Lasche (30, 40) umfasst bzw. umfassen, die durch den L-förmigen Durchlass (28) geführt werden kann, so dass die Lasche (30, 40) sich in einer ersten Codierposition (10a) durch einen horizontalen Abschnitt (34) des L-förmigen Durchlasses (28) erstreckt oder in einer zweiten Codierposition (10b) durch einen vertikalen Abschnitt (36) des L-förmigen Durchlasses (28) erstreckt.

7. Codierstreifen (1) nach einem der Ansprüche 1 bis 6, **dadurch gekennzeichnet, dass** ein zusätzliches Codierelement (18) an dem ersten Teil (6a) des Basiskörpers (6) untergebracht wird und an dem ersten Teil (6a) mittels des zweiten Teils (6b) des Basiskörpers (6) fixiert werden kann.

8. Codierstreifen (1) nach einem der Ansprüche 2 bis 7, **dadurch gekennzeichnet, dass** das erste Codierelement (8) und das zusätzliche Codierelement (18) in dem Basiskörper (6) mittels Zahlen oder Buchstaben in entgegengesetzten Richtungen bezeichnet sind, insbesondere numerisch, so dass das erste Codierelement (8) und das zusätzliche Codierelement (18), wenn sie von oben nach unten gelesen werden, mit aufeinander folgenden Zahlen bezeichnet sind, und, wenn sie von unten nach oben gelesen werden, mit um 180° gedrehten aufeinander folgenden Zahlen bezeichnet sind.

9. Verfahren zur mechanischen Codierung einer Andockstation (2) und eines Einschubmoduls (4) zum Einsetzen in eine Andockstation (2) in einem Schaltschrank (200), umfassend einen Codierstreifen (1) nach einem der Ansprüche 1 bis 8, **gekennzeichnet durch** die folgenden Verfahrensschritte:
a) Festlegen einer Codierposition (10a, 10b) des ersten Codierelements (8) als erste Codierposition oder zweite Codierposition,
b) Anordnen des ersten Codierelements (8) an dem Basiskörper (6) mit der festgelegten Codierposition, und
c) Montieren des Basiskörpers (6) mit dem ersten Codierelement (8) an der Andockstation (2) oder an dem Einschubmodul (4).

10. Verfahren nach Anspruch 9, wobei der Codierstreifen (1) zusätzliche Codierelemente (18b, 18c, 18d, 18e, 18f, 18g) umfasst, von denen jedes in mindestens zwei Codierpositionen (10a, 10b) in dem Basiskörper (6) untergebracht werden kann, wobei das Verfahren die folgenden Verfahrensschritte umfasst:
d) Festlegen der Codierpositionen (10a, 10b) der zusätzlichen Codierelemente (18b, 18c, 18d, 18e, 18f, 18g),
d) Anordnen der zusätzlichen Codierelemente (18b, 18c, 18d, 18e, 18f, 18g) in den festgelegten Codierpositionen (10a, 10b) an dem Basiskörper (6),
f) Ausgestalten eines zusätzlichen Codierstreifens (100), so dass dieser in komplementärer Weise zu dem ersten Codierstreifen (1) codiert ist, gemäß den Verfahrensschritten a), b), d) und e), und
g) Anordnen des Codierstreifens (1) und des zusätzlichen Codierstreifens (100) in einer Andockstation (2) und einem Einschubmodul (4), so dass beim Einsetzen des Einschubmoduls (4) in die Andockstation (2) die Codierstreifen (1, 100) mechanisch interagieren und ein Einsetzen des Einschubmoduls (4) in die Endstelle der Andockstation (2) nur ausgeführt werden kann, wenn der zusätzliche Codierstreifen (100) in komplementärer Weise zu dem Codierstreifen (1) codiert ist.

11. Einschubmodul (4) zum Einsetzen in eine Andockstation (2) eines Schaltschranks (200), umfassend einen Codierstreifen (1) nach einem der Ansprüche 1 bis 8.

12. Schaltschrank (200), der eine Mehrzahl an Andockstationen (2) und mindestens ein Einschubmodul (4) enthält, das in die Mehrzahl von Andockstationen einsetzbar ist, **dadurch gekennzeichnet, dass**
ein Codierstreifen (1) gemäß einem der Ansprüche 1 bis 8 an mindestens einer der Andockstationen (2) montiert ist, und dass ein zusätzlicher Codierstreifen (100) gemäß einem der Ansprüche 1 bis 8, der in einer komplementären Weise zu dem Codierstreifen (1) codiert ist, an dem Einschubmodul (4) angeordnet ist; wobei der zusätzliche Codierstreifen (100) in der eingesetzten Position des Einschubmoduls (4) mechanisch mit dem Codierstreifen (1) der Andockstationen (2) in einer solchen Weise interagiert, dass Teile der Codierelemente (8, 18) des Codierstreifens (1) in Durchlässe (28) des komplementären zusätzlichen Codierstreifens (100) einsetzbar sind.

## Revendications

1. Bande de codage (1) pour le codage mécanique d'une baie d'accueil (2) et d'un module coulissant (4) destiné à être inséré dans une telle baie d'accueil (2), en particulier dans une armoire d'appareillage de commutation, comprenant un corps de base (6) qui est adapté pour être disposé au niveau de la baie d'accueil (2) ou au niveau du module coulissant (4) pour interagir avec une bande de codage complémentaire (1), dans laquelle un premier élément de codage (8) peut être disposé au niveau du corps de base (6) dans au moins deux positions de codage différentes (10a, 10b),
**caractérisée en ce que**
le corps de base (6) est conçu en deux parties, et **en ce que** le premier élément de codage (8) est accueilli au niveau de la première partie (6a) du corps de base (6) et peut être fixé au niveau de la première partie (6a) au moyen de la deuxième partie (6b) du corps de base (6).

2. Bande de codage (1) selon la revendication 1, **caractérisée en ce qu'**au moins un élément de codage supplémentaire (18) peut être disposé au niveau du corps de base (6) dans au moins deux positions de codage différentes (10a, 10b).

3. Bande de codage (1) selon la revendication 2, **caractérisée en ce que** le corps de base (6) a une forme allongée et comprend au moins deux encoches (12a, 12b) qui sont disposées le long d'une ligne imaginaire (26), les encoches étant adaptées pour accueillir les éléments de codage (8, 18), et **en ce que** des moyens de fixation (22) sont disposés aux extrémités opposées respectives (14, 16) du corps de base (6) pour fixer le corps de base (6) à une baie d'accueil et/ou un module coulissant (1).

4. Bande de codage (1) selon la revendication 3, **caractérisée en ce que**, pour accueillir les éléments de codage (8, 18), les encoches (12a, 12b) sont disposées à intervalles réguliers le long de la ligne imaginaire (26), la ligne imaginaire (26) étant parallèle à et à une distance de l'axe longitudinal (24) du corps de base (6).

5. Bande de codage (1) selon la revendication 3 ou 4, **caractérisée en ce que** les encoches (12a, 12b) sont formées dans la face arrière du corps de base (6) et chaque encoche (12a, 12b) contient au moins une ouverture (28) .

6. Bande de codage (1) selon la revendication 5, **caractérisée en ce que** l'ouverture (28) d'une encoche (12a, 12b) dans le corps de base (6) est par conception en forme de L, et **en ce que** le premier élément de codage (8) et/ou l'élément de codage supplémentaire (18) comprennent une languette (30, 40) qui peut être guidée à travers l'ouverture en forme de L (28) de telle sorte que, dans une première position de codage (10a), la languette (30, 40) s'étend à travers une section horizontale (34) de l'ouverture en forme de L (28), ou dans une deuxième position de codage (10b), s'étend à travers une section verticale (36) de l'ouverture en forme de L (28).

7. Bande de codage (1) selon l'une quelconque des revendications 1 à 6, **caractérisée en ce qu'**un élément de codage supplémentaire (18) est accueilli au niveau de la première partie (6a) du corps de base (6) et peut être fixé au niveau de la première partie (6a) au moyen de la deuxième partie (6b) du corps de base (6).

8. Bande de codage (1) selon l'une quelconque des revendications 2 à 7, **caractérisée en ce que** le premier élément de codage (8) et l'élément de codage supplémentaire (18) dans le corps de base (6) sont conçus comme des chiffres ou des lettres dans des directions opposées, en particulier numériquement, de telle sorte que le premier élément de codage (8) et l'élément de codage supplémentaire (18), lorsqu'ils sont lus de haut en bas, sont conçus avec des chiffres consécutifs, et lorsqu'ils sont lus de bas en haut, sont conçus avec des chiffres consécutifs qui sont tournés de 180°.

9. Procédé de codage mécanique d'une baie d'accueil (2) et d'un module coulissant (4) destiné à être inséré dans une baie d'accueil (2) dans une armoire d'appareillage de commutation (200) comprenant une bande de codage (1) selon l'une quelconque des revendications 1 à 8, **caractérisé par** les étapes de procédé suivantes :
a) établissement d'une position de codage (10a, 10b) du premier élément de codage (8) pour qu'il s'agisse d'une première position de codage ou d'une deuxième position de codage,
b) disposition du premier élément de codage (8) au niveau du corps de base (6) avec la position de codage établie, et
c) montage du corps de base (6) avec le premier élément de codage (8) au niveau de la baie d'accueil (2) ou au niveau du module coulissant (4).

10. Procédé selon la revendication 9, dans lequel la bande de codage (1) comprend des éléments de codage supplémentaires (18b, 18c, 18d, 18e, 18f, 18g), dont chacun peut être accueilli au niveau du corps de base (6) dans au moins deux positions de codage (10a, 10b), le procédé comprenant les étapes de procédé suivantes :
d) établissement des positions de codage (10a, 10b) des éléments de codage supplémentaires (18b, 18c, 18d, 18e, 18f, 18g),
d) disposition des éléments de codage supplémentaires (18b, 18c, 18d, 18e, 18f, 18g) dans les positions de codage établies (10a, 10b) au niveau du corps de base (6),
f) configuration d'une bande de codage supplémentaire (100) pour qu'elle soit codée de manière complémentaire à la première bande de codage (1) selon les étapes de procédé a), b), d) et e), et
g) disposition de la bande de codage (1) et de la bande de codage supplémentaire (100) au niveau d'une baie d'accueil (2) et d'un module coulissant (4) de telle sorte que, lors de l'insertion du module coulissant (4) dans la baie d'accueil (2), les bandes de codage (1, 100) interagissent mécaniquement et l'insertion du module coulissant (4) dans le poste d'extrémité de la baie d'accueil (2) ne puisse se faire que si la bande de codage supplémentaire (100) est codée de manière complémentaire à la bande de codage (1).

11. Module coulissant (4) destiné à être inséré dans une baie d'accueil (2) d'une armoire d'appareillage de commutation (200), comprenant une bande de codage (1) selon l'une quelconque des revendications 1 à 8.

12. Armoire d'appareillage de commutation (200) contenant une multiplicité de baies d'accueil (2) et au moins un module coulissant (4) qui peut être inséré dans la multiplicité de baies d'accueil (2), **caractérisé en ce que**
une bande de codage (1) selon l'une quelconque des revendications 1 à 8 est montée sur au moins une des baies d'accueil (2), et **en ce qu'**une bande de codage supplémentaire (100) selon l'une quelconque des revendications 1 à 8 qui est codée de manière complémentaire à la bande de codage (1) est disposée au niveau du module coulissant (4) ; dans laquelle, dans la position insérée du module coulissant (4), la bande de codage supplémentaire (100) interagit mécaniquement avec la bande de codage (1) des baies d'accueil (2) de telle sorte que des parties des éléments de codage (8, 18) de la bande de codage (1) peuvent être insérées dans des ouvertures (28) de la bande de codage supplémentaire complémentaire (100).
